# EUROPEAN PATENT APPLICATION

(11) **EP 4 741 093 A1**
(43) Date of publication of application: **13.05.2026**
(21) Application number: 25214274.0
(22) Date of filing: 07.11.2025
(51) Int. Cl.: B23K 9/32, B08B 15/00, B08B 15/04

(54) **FUME EXTRACTION SYSTEMS FOR ARC WELDING SYSTEMS**

(30) Priority: 08.11.2024 US 202463718092 P; 16.10.2025 US 202519360326
(71) Applicant: Illinois Tool Works Inc., Glenview IL 60025 (US)
(72) Inventor: SHELLABARGER, Dave, Glenview, 60025 (US)
(74) Representative: HGF

(57) **Abstract**

A fume extraction system is designed for metal working and other applications. The fume extraction system includes one or more motors and/or adjustment devices to control fume suction airflow. One or more sensors may monitor a condition of the welding torch to determine if a welding arc is present. Control circuitry is operable to receive signals from the one or more sensors and/or power supply in order to determine the presence of the welding arc. The control circuitry can control the fume extraction system to adjust suction airflow based on the presence of the welding arc.

## Description

### RELATED APPLICATIONS

The present application claims the benefit of U.S. Provisional Patent Application Serial No. 63/718,092, filed November 8, 2024, entitled "FUME MITIGATION SYSTEMS AND METHODS FOR ARC WELDING SYSTEMS." The entirety of U.S. Provisional Patent Application Serial No. 63/718,092 is expressly incorporated herein by reference.

### FIELD OF THE DISCLOSURE

This disclosure relates generally to fume mitigation and, more particularly, to fume mitigation systems and methods for arc welding systems.

### BACKGROUND

A wide range of industrial, commercial, hobby and other applications result in airborne components that can be removed with proper extraction and filtering. Metal working operations, for example, range from cutting, welding, soldering, assembly, and other processes that may generate smoke and fumes. In smaller shops it may be convenient simply to open ambient air passages or to use suction or discharge air from fans to maintain air spaces relatively clear. In other applications, enclosed and/or cart-type fume extraction systems are used. In industrial settings, more complex fixed systems may be employed for extracting fumes from specific works cells, metal working locations, and so forth. In other settings, such as machine shops, woodworking shops, worksites where cutting, sanding and other operations are performed, dust, fumes, particulate and other types of airborne components may be generated that it may be desirable to collect and extract from work areas and controlled spaces.

A number of systems have been developed for fume extraction, and a variety of these are currently in use. In general, these use suction air to draw fumes and smoke from the immediate vicinity of the metal working operation, and to filter the fumes and smoke before returning the air to the room or blowing the air to an outside space.

Further improvements are needed, however, in fume extraction systems. For example, it would be useful to be able to control suction in response to weld activity, thereby improving welding operations.

### SUMMARY

The present disclosure provides improvements to conventional fume extraction designs. Example fume extraction systems can automatically and/or manually control fume suction at one or more work stations, in response to data corresponding to initiation of a welding arc. These and other features and advantages of the present invention will be apparent from the following detailed description, in conjunction with the appended claims and corresponding figures.

### BRIEF DESCRIPTION OF THE DRAWINGS

The benefits and advantages of the present invention will become more readily apparent to those of ordinary skill in the relevant art after reviewing the following detailed description and accompanying drawings.
FIG. 1 illustrates an example fume extractor systems, in accordance with aspects of this disclosure.
FIGS. 2A and 2B illustrate example fume extractor systems operating with one or more manual arc welding torches, in accordance with aspects of this disclosure.
FIGS. 3A and 3B illustrate example fume extractor systems operating with one or more robotic welders, in accordance with aspects of this disclosure.
FIG. 4 provides a method of controlling a fume extraction system operating with one or more arc welding tools, in accordance with aspects of this disclosure.

The figures are not necessarily to scale. Where appropriate, similar or identical reference numbers are used to refer to similar or identical components.

### DETAILED DESCRIPTION

Disclosed are systems and methods for fume extraction control. In particular, a fume extraction system, such as for a welding operation, includes one or more motors, inlets, and/or valves to control fume suction airflow.

In some examples, a welding torch performs a welding operation (e.g., an arc welding operation) on one or more workpieces, thereby creating fumes, debris, etc. One or more sensors (e.g., an optical camera, a laser scanner, a magnetic sensor, a voltage sensor, a current sensor, a voltage or current output, etc.) are arranged to monitor arc characteristics during the welding process (e.g., intensity, wavelength, an output voltage or current, a voltage at the weld, etc.) to determine when arc welding is being conducted, and thus generating fumes. When the arc characteristics indicate an arc welding process is underway, the fume extraction system can be configured to automatically activate, drawing fumes, debris, etc., away from the workspace.

In some examples, control circuitry (e.g., associated with the fume extraction system and/or the arc welding system) is operable to receive signals from the one or more sensors, welding system, and/or the fume extraction system corresponding to the arc and/or the arc welding torch. The control circuitry can compare information from the sensors and/or systems to a list of arc weld characteristics (e.g., stored in a local or networked database). Based on the comparison, the control circuitry can determine arc welding is underway, and activate and/or adjust suction airflow at the one or more workpieces.

In some examples, the control circuitry can automatically control one or more components of the fume mitigation system (e.g., speed of an airflow fan motor, position of a valve, etc.) to activate and/or regulate suction airflow by the fume extraction system. Advantageously, suction airflow is carefully controlled during an arc welding process to efficiently and effectively remove fumes and/or debris from the work environment, while freeing the operator from returning to the fume controls before each welding operation. Beneficially, the fume extraction system is only active at the work space during an arc welding operation, thus the motor is not running unnecessarily while no welding is being performed. This lowers the amount of noise from the fume extraction system, and prolongs the working life of the filters, the motor, and other associated components.

In some disclosed examples, the fume extraction system is controlled to regulate suction airflow based on one or more arc characteristics (e.g., intensity of the arc, heat, duration) being within a predetermined range and/or exceeding a predetermined threshold level.

In some disclosed examples, the fume extraction system is connected to a fume gun (e.g., the suction intake is collocated with the welding torch).

Conventional fume extraction systems operate at a distance from the work environment, and have to be to activated prior to the welding operation and deactivated following the welding operation. Thus, the fume extraction system often operates continuously during welding, with a single, unchanging amount of suction (e.g., the suction or airflow motor is on the entire duration of welding, at a constant speed).

By contrast, the disclosed fume extraction system may default to a disabled mode (e.g., turned off, with the motor at a low speed, with the airflow suction level low), and be automatically activated in response to sensor and/or electronic feedback (e.g., from a photodetector, power source, etc.) that corresponds to arc characteristics. This system allows the operator to focus on creating the weld, while ensuring the fume extraction system is active only when needed.

In disclosed examples, an amount of suction provided from a fume extraction system during an arc welding operation is controlled based on one or more arc characteristics (e.g., light intensity) exceeding a threshold level. Such control can be implemented remotely and in real-time (e.g., responsive to changing conditions) during a welding operation. For example, welding operations may employ a variety of fume extraction systems, including large, area-wide systems, mobile cart-type systems, as well as fume extraction source capture systems (e.g., fume guns).

In the example of area-wide and/or cart-type systems, one or more sensors can be arranged within the welding environment, either mounted to the fume extraction systems (e.g., a conduit, hood, manifold, support, etc.), and/or arranged remote from the system (e.g., within the workspace, in view of the welding site). In the example of a fume gun, fume nozzles and/or fume extraction conduits/hoses are arranged on or near a tip of the welding torch. The fume nozzles are connected to a high speed, high flow fume extraction unit.

The disclosed systems stand in contrast to conventional fume capture systems, which require the operator to activate and/or adjust the suction on the fume gun by manually operating a valve or some other type of vent. Advantageously, the disclosed fume extraction systems and associated control results in a reduction in filter run-time, while improving ease of use by automatically determining when to activated, deactivate, and/or adjust, including a desired amount of adjustment, as well as controlling the activation, deactivation, and/or adjustment. Also beneficially, the sensors could be configured to operate in the visible spectrum (e.g., for arc welding), and the infrared spectrum (e.g., for laser welding or cleaning).

In an example, the amount of suction is remotely adjusted during welding by controlling a speed of a variable-frequency drive (VFD) motor that provides negative airflow into the fume extraction system from the fume nozzle. In some examples, valving or other suitable devices can be controlled to adjust the suction flow for a given welding torch. Multiple welding sites occupied by multiple welders can be connected to a single fume extraction unit (e.g., each connected via a dedicated conduit(s)). The valves/adjustment devices can be controlled individually to control the suction flow at the point of welding, independent of any other welding torch/welding site.

To implement the fume regulation scheme disclosed herein, control circuitry can be incorporated within the fume extraction system, on the welding torch itself, an associated robot welding system, and/or with another related machine (e.g., a wire feeder, welding power source, remote control). Suction flow may be controlled by a computing platform or control circuitry, such as in response to a monitored arc characteristic (e.g., via one or more sensors) and/or based on one or more parameters of an associated welding system that correspond to arc welding (e.g., power output characteristics, wire feed speed, shielding gas flow, etc.). Sensor data of the monitored arc characteristic may be used to determine the presence of arc welding, and control the system to activate, deactivate, and/or adjust suction flow automatically. In some examples, an alert can be provided to an operator corresponding to the changing conditions, and allow the operator to control the system. Accordingly, control of the fume extraction system can be automatic (e.g., in response to one or more sensors inputs, in determination of arc welding) and/or in response to a user input (e.g., an input via a trigger, knob, pedal, touchscreen, etc.).

Advantageously, the disclosed fume extraction systems can be incorporated with automated welding systems (e.g., robotic welders), and/or with manual welding torch applications as well. The disclosed fume extraction systems can be integrated with existing welding systems and/or connected thereto as a retrofit system.

According to aspects of this disclosure, example fume extraction systems include: one or more sensors configured to monitor one or more arc characteristics of an arc from an arc welding torch; a motor configured to generate airflow suction to extract air from a work space; control circuitry to: receive information from the one or more sensors corresponding to the one or more arc characteristics; and activate the motor to generate the airflow suction based on the one or more arc characteristics.

In some example fume extraction systems, the one or more sensors includes one or more of a photodetector, an optical camera, a laser scanner, a temperature sensor, a magnetic sensor, a contact sensor, a current sensor, or a voltage sensor. In some example fume extraction systems, the arc characteristics include one or more of a light intensity, a light wavelength, a light frequency, a current to the arc welding torch, or a voltage to the arc welding torch. In some example fume extraction systems, the one or more sensors are arranged on the arc welding torch. In some example fume extraction systems, the one or more sensors are arranged on a welding helmet.

In some example fume extraction systems, the one or more sensors are arranged in proximity to the work space and remote from the arc welding torch, the welding helmet, or the fume extraction system. In some example fume extraction systems, the one or more sensors is removably affixed to the fume extraction system. In some example fume extraction systems, the control circuitry is configured to continuously or periodically monitor the one or more arc characteristics; and adjust a speed of the motor based on changes to the arc characteristics.

According to other aspects of this disclosure, example fume extraction systems include: one or more sensors configured to monitor one or more arc characteristics of an arc from an arc welding torch; one or more conduits arranged at a work space; and one or more valves coupling the one or more conduits to a manifold of the fume extraction system; control circuitry to: receive information from the one or more sensors corresponding to the one or more arc characteristics; and adjust a position of the one or more valves to connect the one or more conduits to the manifold based on the one or more arc characteristics.

In some example fume extraction systems, the one or more sensors are arranged on the one or more conduits proximate to the work space. In some example fume extraction systems, the one or more conduits are coupled to the arc welding torch.

In some example fume extraction systems, the one or more conduits comprise first and second conduits, the first conduit coupled to the arc welding torch and the second conduit coupled to a second arc welding torch. In some example fume extraction systems, the first conduit and the second conduit are both coupled to the one or more valves. In some example fume extraction systems, the one or more valves includes first and second valves, the first valve coupled to the first conduit and the second valve coupled to the second conduit. In some example fume extraction systems, the one or more sensors comprise first and second sensors, the first sensor configured to monitor arc welding characteristics of the arc welding torch and the second sensor configured to monitor arc welding characteristics of the second arc welding torch. In some example fume extraction systems, the control circuitry is further configured to independently control the first and second valves.

In some example fume extraction systems, the one or more sensors includes one or more of a photodetector, an optical camera, a laser scanner, a temperature sensor, a magnetic sensor, a contact sensor, a current sensor, or a voltage sensor. In some example fume extraction systems, the arc characteristics include one or more of a light intensity, a light wavelength, a light frequency, a current to the arc welding torch, or a voltage to the arc welding torch.

When introducing elements of various embodiments described below, the articles "a," "an," and "the" are intended to mean that there are one or more of the elements. The terms "comprising," "including," and "having" are intended to be inclusive and mean that there may be additional elements other than the listed elements. Moreover, while the term "exemplary" may be used herein in connection to certain examples of aspects or embodiments of the presently disclosed subject matter, it will be appreciated that these examples are illustrative in nature and that the term "exemplary" is not used herein to denote any preference or requirement with respect to a disclosed aspect or embodiment. Additionally, it should be understood that references to "one embodiment," "an embodiment," "some embodiments," and the like are not intended to be interpreted as excluding the existence of additional embodiments that also incorporate the disclosed features.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein, the terms "first" and "second" may be used to enumerate different components or elements of the same type, and do not necessarily imply any particular order.

As used herein the terms "circuits" and "circuitry" refer to any analog and/or digital components, power and/or control elements, such as a microprocessor, digital signal processor (DSP), software, and the like, discrete and/or integrated components, or portions and/or combinations thereof, including physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller.

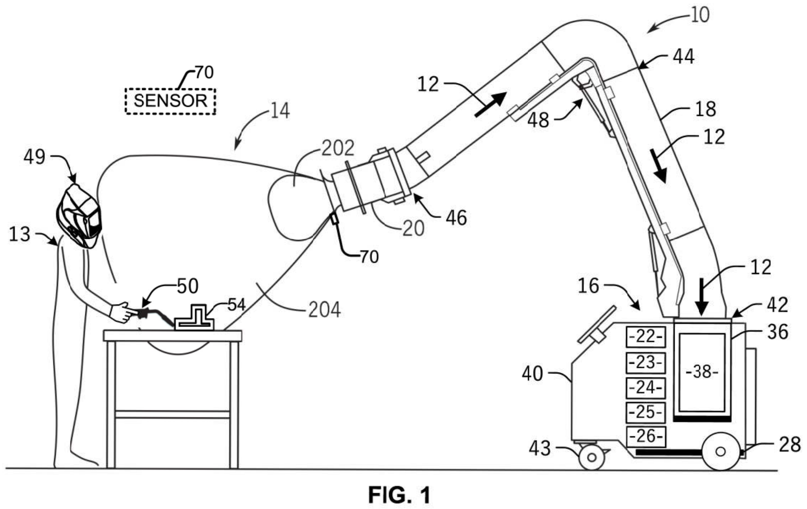

Turning now to the drawings, FIG. 1 illustrates an extraction system 10 for extracting airborne components, such as smoke, fumes, particulate matter, and more generally, workspace air as indicated by reference numeral 12 from a work area 14. As shown, a welder 13 wearing a helmet 49 may operate a welding tool 50 (e.g., an arc welding torch) to weld one or more workpieces. In the illustrated embodiment the extraction system 10 comprises a base unit 16 coupled to conduits 18 that channel air to and from a hood 20. The hood 20 is designed to be placed at or near the work area 14 and, when the base unit 16 is activated, serves to create a region of air around the area and to extract the workspace air, directing extracted air 12 to the base unit 16 for processing.

Due to the intense brightness from an arc during an arc welding operation, a shade or filter is typically used to shield the operator's eyes from the arc during welding, often built directly into the helmet 49. Some conventional auto-darkening lenses employ photodetectors to automatically sense the presence and/or intensity of the arc, and adjust the amount of shading accordingly. For example, welding at high amperages may result in more intense light, causing a stronger reaction from the photodetector, and thus require higher shade values due to the intensity of the welding arc light being very bright. Disclosed welding helmets can include flip-up welding helmets with clear grinding shields, a welding helmet integrated with a cap, welding goggles, or welding glasses.

Photodetector sensors (such as sensors 70) can be arranged in the welding environment and used to detect the presence of an arc, in a manner similar to those used to control shading on an auto-darkening filter for a welding helmet. Thus, the sensors 70 can be used to signal to the fume extraction system 10 (e.g., via the control circuitry 26) to control the motor 22 to activate, deactivate, and/or adjust an amount of suction airflow (e.g., by controlling the motor speed). Such sensors may be connected to the control circuitry 26 via wired and/or wireless connections, and may be arranged on the fume extraction system 10 (e.g., on the conduits 18, hood 20, etc.), on the torch 50, on the welding helmet 49, and/or the welding environment.

It should be noted that while in certain embodiments a stand-alone base unit 16 or cart-type unit is described, the present disclosure is not limited to any particular physical configuration. More generally, systems and arrangements provided herein may be implemented as fixed or semi-fixed installations, such as those used in industrial, commercial, hobby, and other settings. That is, certain of the components of the base unit described herein may serve multiple workspaces, work cells, weld cells, work locations and areas, and so forth, by common conduits that direct positive-pressure air to and channel air and airborne components from one or more workspaces. Operator controls may be positioned at the work area and/or remotely from such workspaces to control operation of the system 10.

Depending on the application, airborne components evacuated from the work area 14 may be in an aerosol form, such as solid, liquid or gaseous phase particles that are suspended in air. Such airborne components may form smoke, fumes (including chemical fumes), or clouds of components generated by an operation performed in the area. In some applications, the airborne components may be at least temporarily airborne but not suspended in the air, such as in the case of larger particulates, such as droplets, mist (e.g., from oils, coolants, and so forth), dust (e.g., from drywall, grain, minerals, cements, or other dust sources), chips, debris, and so forth. The system 10 is configured to collect and extract any such airborne components. Similarly, reference is made in this disclosure to "air" or "airborne," although the fluid in which the airborne components are found and that is circulated by the system may be, more generally, a gaseous substance that need not contain the same constituents, or in the same ratios as found in atmospheric air. Such gasses are intended nevertheless be included in the term "air" or "airborne." Moreover, it is presently contemplated that the same principles of fluid dynamics and borne component removal may be applied to other "fluids" than air or gasses (including liquids), and to that extent the teachings of the present disclosure are intended to extend to those applications.

In some examples, the base unit 16 includes a blower 22 driven by a drive motor 24. The drive motor 24 (as well as other functions of the extraction system 10) is controlled by control circuitry 26 which may provide drive signals to the motor for fixed-speed or variable-speed operation. The cart may best be designed with a small and highly efficient drive motor on the blower. In some examples, more than one motor and/or blower, fan or compressor may be used. The base unit 16 may be designed to draw power from any source, such as the power grid, battery sources, engine-generator sets, and so forth. The control circuitry 26 typically includes processing circuitry and memory for carrying out drive operations as desired by the operator or in response to system inputs as described below. Accordingly, the control circuitry 26 may communicate with an operator interface 23 for receiving operator settings, speed settings, on-off commands, and so forth. Similarly, the control circuitry 26 may include and/or communicate with an interface 25 (e.g., a remote interface) designed to receive signals from remote inputs, remote systems, sensors 70, and so forth. The control circuitry 26, via the remote interface 25, may also provide data to such remote systems such as for monitoring and/or controlling operation of the extraction system 10.

As shown in FIG. 1, the conduits 18 extend between the base unit 16 and the hood 20, which may include a positive pressure air conduit and/or a return air conduit. In some examples, the positive pressure air conduit provides air to the hood, while the return air conduit is under a negative or slight suction pressure to draw air containing the airborne components from the work area 14. The extracted air 12 returning from the hood 20 in conduit 18 may be directed through a filter 38. In some examples, the air 12 may be re-introduced into the blower 22 as a semi-controlled system. As described herein, the system may also include components designed to allow for adjustment of the individual or relative flow rates of one or both of the positive and negative pressure air streams.

In some examples, adjustment of the positive pressure air flow and/or the return air flow may be optimized for specific operations of the system. Several different techniques are presently contemplated for such adjustment and may include, for example, a bypass valve, a louver, or other mechanical device which may be adjusted to limit the flow of air from the suction filter and, consequently, the intake of air into the blower 22 from the ambient surroundings. Such adjustment may advantageously allow for relative mass or volumetric flow rates of the positive pressure and return airstreams to enhance creation of the air region and extraction of workspace air 204. For example, user inputs may be provided via the operator interface 23 to control one or both adjustments, communicated to the control circuitry 26 to regulate their operation (e.g., via small adjustment motors and/or actuator assemblies). In some examples, adjustments to flow rates for the negative pressure airstreams (and/or positive pressure airstreams) may be made by altering the speed of one or more motors and/or blowers, fans or compressors. Moreover, other and additional components and functionalities may be built into the system.

As shown in the illustration of FIG. 1, adjustments to the extraction system 10 may alter an amount of workspace air drawn into the extraction system 10. For example, a smaller region 202 represents an approximate limit for the effective capture and extraction of airborne components at a first extraction setting, while a larger region 204 represents a much greater effective capture and extraction region at a second extraction setting. While the effectiveness of the extraction will depend upon factors such as particle size, temperature, flow rate, etc., the graphic illustration of FIG. 1 provides a demonstration of adjustable extraction capabilities.

In the illustration of FIG. 1, the example system 10 is housed in a cart 40 designed to be rolled on wheels or casters 43 to the vicinity of a metal working operation. The system 10 can be designed to be plugged into a conventional outlet, such as to draw power from the power grid. In some examples, the conduits 18 include flexible joints, allowing raising, lowering, lateral and other positioning of the hood 20 at or near, typically above, the work space 14. In some examples, an arrangement of conduits may make use of a manifold to aide in distributing positive pressure air flow to the annular space between the inner and outer shrouds of the hood.

As mentioned above, the present techniques may be employed in systems and arrangements other than carts or systems and base units that are local to a work location. In some examples, fixed or semi-fixed extraction systems may be employed in workshops, factories, assembly and metalworking plants, and so forth.

The conduits 18 convey both a positive pressure or outgoing flow and a return flow that may contain airborne components to be extracted from the work area. In this example, the conduits 18 are adapted for rotation at one or more interfaces. The conduits 18 may rotate more or less than 360 degrees at each interface, although full multi-rotation capabilities may be designed into one or more joints between the conduits 18, the hood 20, and/or the base unit 16. In the embodiment of FIG. 1, the conduit 18 has a lower joint 42 where it joins the base unit, a middle joint 44 that joins two generally linear sections of conduit and a hood joint 46 about which the hood 20 may be pivoted at least within a limited angular range. One or more support structures 48 are provided adjacent to the lower joint 42 or joint 44 to aid in supporting the arm as it is extended toward and/or retracted from a work area. In the example system 10 of FIG. 1, the joints may include smooth inner walls that can be deformed so as to permit extension, retraction and, more generally, positioning of the conduits 18 with respect to the base unit 16, while adding little or no head loss as compared to a linear section of conduit.

As shown in FIG. 1, the base unit 16 has a filter or filter element 38 disposed in a filter box 36. The filter box 36 defines a region around or adjacent to the filter 38 from which air is drawn during operation of the system 10. That is, as disclosed herein, the returning or negative airstream enters the base unit 16, and this airstream, bearing the airborne components (e.g., debris, particles, etc.) enters into the region and then through an outer periphery of the filter 38. In some examples, the filter 38 is cylinder-like, but any suitable configuration may be used. In some examples, the filter 38 is hollow, and is closed by a cap. Because debris may be released from the filter element during cleaning, a collection tray 28 is placed near a bottom region of the base unit 16 to allow the debris to be collected and/or separated from the filter 38.

Within the cart, return flow air 12 enters the filter box 36 containing the filter 38, where the air 12 is filtered to remove particulate matter and other components borne by the airstream. The assembly may be designed for pressure cleaning, in a process that may direct pressurized air against one or more filter elements to promote the release of the captured particulate. From the filter box 36, air is drawn into the blower 22 which is driven by motor 24 as described above. In some examples, multiple motors and/or blowers may be employed. For example, one motor and blower set may be used for the outgoing or positive air stream, while another motor and blower set may be used for the return or negative air stream. One or both air streams may be filtered by a common filter or dedicated filters.

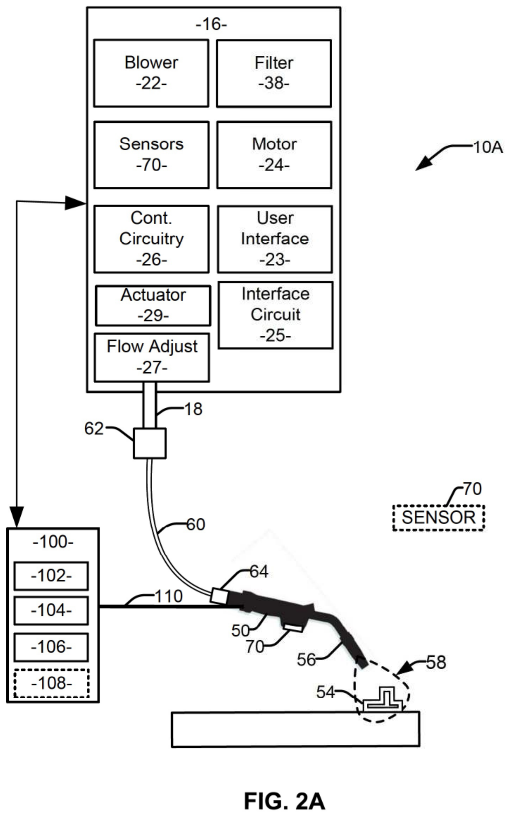

FIG. 2A illustrates another fume extraction system 10A for extracting airborne components, such as smoke, fumes, particulate matter, and more generally, workspace air as indicated by reference numeral 58 from a work area including a workpiece 54, with the fume extraction system 10A being incorporated with a welding system 100, which may include a welding power supply 102, wire feeder 104, shielding gas 106, and/or control circuitry 108, among other components useful in conducting arc welding. In the illustrated embodiment, the fume extraction system 10A includes one or more of a fume nozzle 56, a hose 60, and/or a junction 62 connected to the fume extraction system 10A, which may include one or more of control circuitry 26, interface circuit 25, a flow adjustment device 27, a user interface 23 (e.g., touchscreen, control panel, etc.), one or more sensors 70, a motor 24 (e.g., a fixed speed motor, a variable speed motor, a VFD, etc.) and/or a blower 22. The system 10A is similar to the system 10 illustrated in FIG. 1, and may include similar components, or may include more, fewer, and/or different components, as needed by a particular application.

Operation of the welding system 100 and/or the fume extraction system 10A can be coordinated between control circuitry 26 and control circuitry of the welding system 100 (and/or the individual components therein), and/or a single control circuit may transmit commands to the other control circuitry.

The fume extraction system 16 may include a junction, connection and/or manifold 62 into which the hose 60 connects, drawing the fumes into the manifold 62 and through the conduits 18A, which can be collected, filtered and/or removed via filter 38. The flow adjustment device 27 can include valving and/or louvers, which can be adjusted manually, mechanically, and/or automatically, such as via control of one or more connected actuators 29 (in response to a sensor value, power supply characteristic, and/or user input).

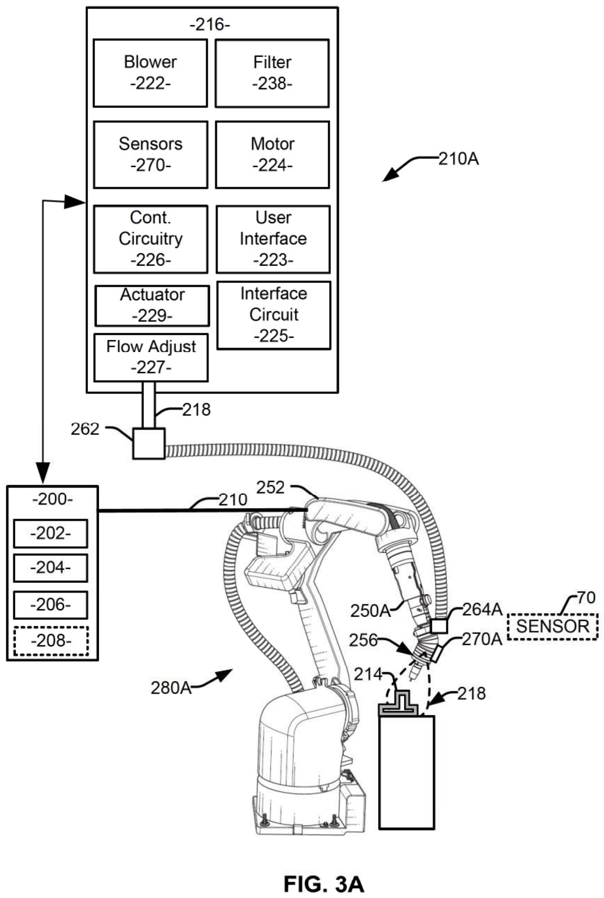

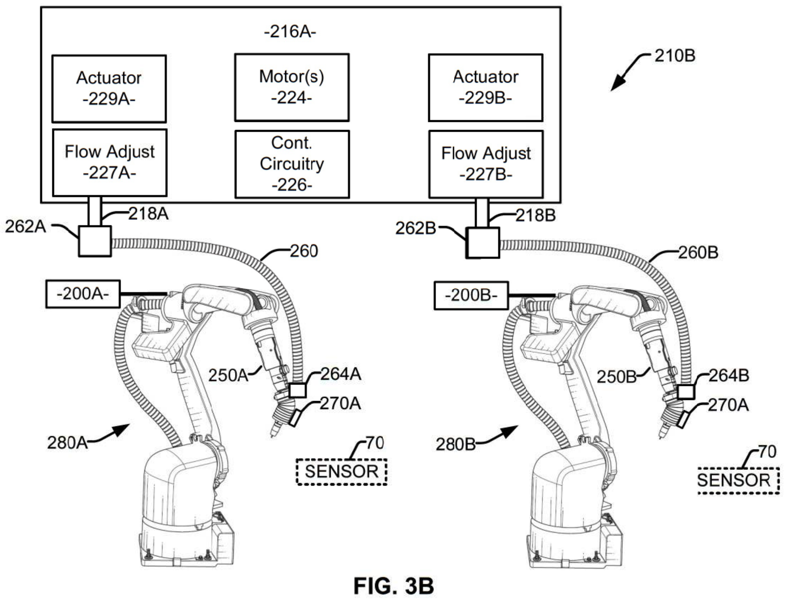

In some examples, the welding torch 50 is a manually operated torch. The welding system 100 can also be configured to control a robotic welding system, with a robotic arm to support and manipulate a welding torch 12 (e.g., as shown in FIG. 3). The welding system 100 is connected to the fume extraction system via a cable 110 (and/or other power and/or communications channel), to coordinate control between the welding system 100 and the fume extraction system 10A. A sensor 70 may be arranged on the welding torch 50 in any suitable manner to view creation of an arc. Although illustrated as mounted to the body of the welding torch, in some examples a sensor may be arranged within the nozzle 56 of the fume gun.

In some examples, the control circuitry 108 and/or sensors 70 of the welding system 100 monitor one or more arc characteristics during an arc welding operation (e.g., sensor feedback, voltage and/or current output ) and, through analysis of the collected data, make a determination that an arc is present. For instance, based on sensor data, the control circuity 26 can command the fume extraction system 10A to activate, deactivate, and/or adjust the flow rate of the fume extraction system 10A when the sensor (e.g., photodetector) receives an input corresponding to a value that exceeds a threshold intensity value (e.g., stored in memory at the welding system 100 and/or the fume extraction system 10A). This response from the control circuitry may be timed, such that the threshold value should be exceeded for greater than a predetermined period of time. In some examples, the voltage and/or current values (collected and/or averages) from the welding system 100 are transmitted to the control circuitry 26, which controls the fume extraction system 10A accordingly. Communications between the two systems can be implemented at interface circuitry via wired and/or wireless communications (e.g., Bluetooth, WiFi, ZigBee, etc.) as digital or analog signals.

For example, based on the values of the arc characteristics, one or more of the flow adjustment device 27 and/or the motor 24 can be adjusted to achieve a desired flow rate. In some examples, the welding torch 50 is equipped with a separate flow adjustment device and/or valve 20A, which may be controlled by the control circuitry 26. For instance, one or more sensors 70 can detect an intensity and/or brightness of light from the arc at the welding site. The sensor data corresponding to the arc can be transmitted to the control circuitry 26, which is operable to command the motor 24, flow adjustment device 27 (e.g., valve) to regulate suction airflow at the welding site. For instance, one or more inputs from the sensors can be used to inform control circuitry 120. Independently or collectively, the sensors monitor arc characteristics to determine the presence of an arc.

Based on the monitored arc characteristics, the control circuitry 26 determines an arc is present, and controls the motor 24 to change speed to achieve the desired suction airflow. Additionally or alternatively, the control circuitry 26 can control a position of the flow adjustment device(s) 27, 64, which may be a valve or louver, and adjust a position of the valve or louver to achieve the desired suction airflow.

For example, the device 64 may be one or more hose adjustment devices 64, arranged on or near the welding torch 50. The hose adjustment devices 64 can be arranged at an interface or junction between the hose 60, and/or incorporated within the hose itself. In some examples, the welding torch 50 is connected to the fume extraction system 10A by a single fume hose, with each torch employing a dedicated hose adjustment device.

In some examples, adjustment of the flow adjustment devices 27 and/or the hose adjustment devices 64 may be optimized for specific operations of the system (e.g., welding process, weld joint, etc.). Several different devices and/or techniques are presently contemplated for such adjustment and may include, for example, a bypass valve, a louver, or other mechanical device which may be adjusted to limit the flow of air from the fume extraction system 10A and, consequently, the intake of air into the nozzle 56 from the area 58.

In some examples, the systems combine outputs in order to provide a single and/or combined conduit to the welding torch 50. For instance, the hose may connect with a power and/or wire output from the welding system 100 and wire feeder 102. They connect at a junction to be channeled into conduit, which may be a type of unicable to provide power, data, shielding gas, and/or wire to the welding torch 50, as well as a hose to draw out air to the fume extraction system 10A.

Although example fume extraction systems are illustrated as employing a single torch, the disclosed systems and controls can be implemented on two, three, four, five, six, seven, eight, nine, ten or more torches, which may be connected to a single and/or multiple fume extraction systems (e.g., fume extraction system 10). Further, each connected torch may have one or more flow adjustment devices (e.g., hose adjustment devices 64, and/or flow adjustment devices 27, etc.), which may be the same or different from another connected torch.

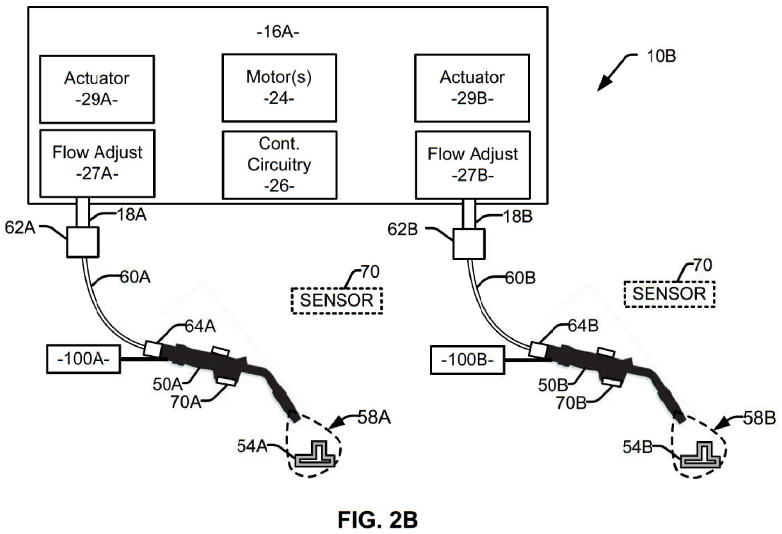

In the example system 10B illustrated in FIG. 2B, two torches 50A and 50B are connected to a single fume extraction system 10B, which includes base unit 16A, motor(s) 24 and control circuitry 26, which may be the same or different from the motors and control circuitry of systems 10 and 10A. As shown, each torch is connected to a dedicated flow adjusters 27A and 27B, which are connected to and/or controlled by actuators 29A and 29B. Similarly, each torch is connected to the base unit 16A via hoses 60A, 60B, through junction 62A, 62B, and conduits 18A, 18B. Further, torches 50A and 50B may be connected to separate welding system 100A and 100B, respectively. In other examples, the torches are connected to a single welding system or bank of welding systems.

However, in some examples, both torches are connected to the base unit 16A, and thus the motor and filter, via a single hose, junction, conduit, and/or flow adjustment device. In such an example, each torch may include a dedicated hose adjustment device 64A, 64B, responsive to detection of arc characteristics from sensors 70A, 70B (and/or from sensors 70 arranged in the welding environment). The sensors 70A, 70B may be connected to the control circuitry 26, and/or may be connected to control circuitry within the body of the welding torch. In response to a determination that an arc has been initiated/is ongoing, the control circuitry can control the hose adjustment device 64A, 64B to adjust position or orientation to close, open, and/or adjust the size of the aperture through the hose to the base unit 16B.

FIGS. 3A and 3B illustrate fume extraction systems 210A and 210B, servicing a single robotic welding system 280, and robotic welding systems 280A and 280B, respectively. As shown in FIG. 3A, the robotic welding system 280 includes one or more robotic arms 252 configured to manipulate one or more robotic welding torches 250. The robotic welding torch 250 is connected to fume extraction system 210A via fume hose 260, and configured for source capture via airflow 218 at workpiece 214. The welding torch 250 is equipped with a fume nozzle 256, connected to fume hose 260 via a valve 264. One or more sensors 270 can be arranged at one or more locations on the robotic system 280, including, but not limited to, the torch 250 near the welding site.

In the illustrated embodiment, the fume extraction system 210A includes one or more of the fume nozzle 56, the hose 260, and/or junction 262 connected to the fume extraction system 210A, which may include one or more of control circuitry 226, interface circuit 225, a flow adjustment device 227, a user interface 223 (e.g., touchscreen, control panel, etc.), one or more sensors 270, a motor 224 (e.g., a fixed speed motor, a variable speed motor, a VFD, etc.) and/or a blower 222. The system 210A is similar to the system 10 illustrated in FIG. 1, system 10A illustrated in FIG. 2A, and/or system 10A illustrated in FIG. 2B, and may include similar components, or may include more, fewer, and/or different components, as needed by a particular application.

Operation of the welding system 200 and/or the fume extraction system 210A can be coordinated between control circuitry 226 and control circuitry 208 of the welding system 200 (and/or the individual components therein), and/or a single control circuit may transmit commands to the other control circuitry. As shown, the robotic welding torch 210 is connected to the fume extraction system 210A via junction 262 and/or one or more communication channels (e.g., wired and/or wireless channels) to transmit control and informational signals between the torches and the system 210A (e.g., the control circuitry 226 of the system 210A, and/or control circuitry 208 of welding system 200).
The robotic welding torch 210 can include one or more sensors 270 (e.g., a photodetector, an optical camera, a laser scanner, a magnetic sensor, a heat sensor, a contact sensor, a voltage sensor, etc.) to monitor one or more welding conditions corresponding to a welding arc, as disclosed herein. By receiving feedback from the sensors 270 regarding one or more arc characteristics, the control circuitry 226 can control the actuator 229 to change position or orientation of flow adjustment device 227, and/or valve 264 - although valve 264 may be controlled by circuitry incorporated with the torch 250, as disclosed herein.

In the example system 210B illustrated in FIG. 3B, two torches 50A and 50B are connected to a single fume extraction system 210B, which includes base unit 216A, motor(s) 224 and control circuitry 226, which may be the same or different from the motors and control circuitry of systems 10 and 210A. As shown, each torch is connected to a dedicated flow adjusters 227A and 227B, which are connected to and/or controlled by actuators 229A and 229B. Similarly, each torch is connected to the base unit 216A via hoses 260A, 260B, through junction 262A, 262B, and conduits 218A, 218B. Further, torches 250A and 250B may be connected to separate welding system 200A and 200B, respectively. In other examples, the torches are connected to a single welding system or bank of welding systems.

However, in some examples, both torches are connected to the base unit 216A, and thus the motor and filter, via a single hose, junction, conduit, and/or flow adjustment device. In such an example, each torch may include a dedicated hose adjustment device 264A, 264B, responsive to detection of arc characteristics from sensors 270A, 270B (and/or from sensors 270 arranged in the welding environment). The sensors 270A, 270B may be connected to the control circuitry 226, and/or may be connected to control circuitry within the body of the welding torch. In response to a determination that an arc has been initiated/is ongoing, the control circuitry can control the hose adjustment device 264A, 264B to adjust position or orientation to close, open, and/or adjust the size of the aperture through the hose to the base unit 216B.

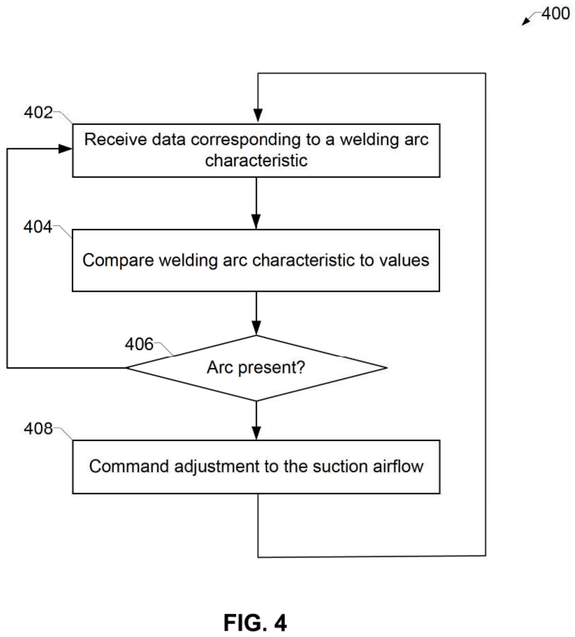

FIG. 4 illustrates a method of operating a fume extraction system, such as the fume extraction systems 10, 10A, 10B, 210, 210A, and 210B illustrated in FIGS. 1 to 3B. In block 402, control circuitry (e.g., the control circuitry 26, 26A, 26B, 226, 226A, 226B) receives data corresponding to one or more arc characteristics of the weld. For example, the data may correspond to a signal from a photodetector, indicating the light from the arc exceeded a predetermined value associated with the one or more arc characteristics. In some examples, the data corresponds to a value provided from the power supply corresponding to arc generation.

In block 404 the one or more arc characteristics are compared to a listing of threshold characteristics (and/or threshold characteristic values) corresponding to a welding arc, which can be determined empirically and/or from an input received at the control circuitry. In block 406, the presence of a welding arc is determined based on the comparison.

In block 408, the control circuitry commands adjustment to the suction flow by controlling one or more of the speed of the motor (e.g., motor 24) and/or a position of a fume adjustment device (e.g., fume adjustment device 27 and/or valve 64). In examples, the fume adjustment device and/or valve may include one or more flow regulators, such as a louver or valve, which may be arranged with the one or more conduits and/or hoses connecting the welding torch to the fume extraction system. Thus, a change in position of the devices/valves may alter a rate of flow of the airflow suction at the welding site.

In some examples, the fume extraction system is further configured to generate an alert in response to a given determination. For instance, if the arc is detected and/or if an adjustment has been made, an alert can be generated and stored with the control circuitry and/or presented to the operator (e.g., at a display, an audible alert, etc.).

In some examples, original equipment or even retrofits for the disclosed fume extraction systems may be made to equipment such as shop vacuum systems, existing evacuation installations, and so forth. It is also contemplated that structures and teachings based on those set forth herein may be employed in specific settings to provide enhanced fume and airborne component collection.

As utilized herein, "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y and z." As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, blocks and/or components of disclosed examples may be combined, divided, re-arranged, and/or otherwise modified. Therefore, it is intended that the present method and/or system not be limited to the particular implementations disclosed, but that the present method and/or system will include all implementations falling within the scope of the appended claims, both literally and under the doctrine of equivalents.

Certain embodiments of the invention are described in the following clauses:
Clause 1. A fume extraction system, comprising:
   one or more sensors configured to monitor one or more arc characteristics of an arc from an arc welding torch;
   a motor configured to generate airflow suction to extract air from a work space; and
   control circuitry configured to:
      receive information from the one or more sensors corresponding to the one or more arc characteristics; and
      activate the motor to generate the airflow suction based on the one or more arc characteristics.
Clause 2. The fume extraction system as defined in clause 1, wherein the one or more sensors includes one or more of a photodetector, an optical camera, a laser scanner, a temperature sensor, a magnetic sensor, a contact sensor, a current sensor, or a voltage sensor.
Clause 3. The fume extraction system as defined in clause 1, wherein the arc characteristics include one or more of a light intensity, a light wavelength, a light frequency, a current to the arc welding torch, or a voltage to the arc welding torch.
Clause 4. The fume extraction system as defined in clause 1, wherein the one or more sensors are arranged on the arc welding torch.
Clause 5. The fume extraction system as defined in clause 1, wherein the one or more sensors are arranged on a welding helmet.
Clause 6. The fume extraction system as defined in clause 1, wherein the one or more sensors are arranged in proximity to the work space and remote from the arc welding torch, the welding helmet, or the fume extraction system.
Clause 7. The fume extraction system as defined in clause 1, wherein the one or more sensors is removably affixed to the fume extraction system.
Clause 8. The fume extraction system as defined in clause 1, wherein the control circuitry is configured to continuously or periodically monitor the one or more arc characteristics; and adjust a speed of the motor based on changes to the arc characteristics.
Clause 9. A fume extraction system, comprising:
   one or more sensors configured to monitor one or more arc characteristics of an arc from an arc welding torch;
   one or more conduits arranged at a work space;
   one or more valves coupling the one or more conduits to a manifold of the fume extraction system; and
   control circuitry configured to:
      receive information from the one or more sensors corresponding to the one or more arc characteristics; and
      adjust a position of the one or more valves to connect the one or more conduits to the manifold based on the one or more arc characteristics.
Clause 10. The fume extraction system as defined in clause 9, wherein the one or more sensors are arranged on the one or more conduits proximate to the work space.
Clause 11. The fume extraction system as defined in clause 10, wherein the one or more conduits are coupled to the arc welding torch.
Clause 12. The fume extraction system as defined in clause 9, wherein the one or more conduits comprise first and second conduits, the first conduit coupled to the arc welding torch and the second conduit coupled to a second arc welding torch.
Clause 13. The fume extraction system as defined in clause 12, wherein the first conduit and the second conduit are both coupled to the one or more valves.
Clause 14. The fume extraction system as defined in clause 13, wherein the one or more valves includes first and second valves, the first valve coupled to the first conduit and the second valve coupled to the second conduit.
Clause 15. The fume extraction system as defined in clause 14, wherein the one or more sensors comprise first and second sensors, the first sensor configured to monitor arc welding characteristics of the arc welding torch and the second sensor configured to monitor arc welding characteristics of the second arc welding torch.
Clause 16. The fume extraction system as defined in clause 15, wherein the control circuitry is further configured to independently control the first and second valves.
Clause 17. The fume extraction system as defined in clause 9, wherein the one or more sensors includes one or more of a photodetector, an optical camera, a laser scanner, a temperature sensor, a magnetic sensor, a contact sensor, a current sensor, or a voltage sensor.
Clause 18. The fume extraction system as defined in clause 9, wherein the arc characteristics include one or more of a light intensity, a light wavelength, a light frequency, a current to the arc welding torch, or a voltage to the arc welding torch.

## Claims

1. A fume extraction system, comprising:
one or more sensors configured to monitor one or more arc characteristics of an arc from an arc welding torch;
a motor configured to generate airflow suction to extract air from a work space; and
control circuitry configured to:
receive information from the one or more sensors corresponding to the one or more arc characteristics; and
activate the motor to generate the airflow suction based on the one or more arc characteristics.

2. The fume extraction system as defined in claim 1, wherein the one or more sensors includes one or more of a photodetector, an optical camera, a laser scanner, a temperature sensor, a magnetic sensor, a contact sensor, a current sensor, or a voltage sensor.

3. The fume extraction system as defined in claim 1, wherein the arc characteristics include one or more of a light intensity, a light wavelength, a light frequency, a current to the arc welding torch, or a voltage to the arc welding torch.

4. The fume extraction system as defined in claim 1, wherein the one or more sensors are arranged on the arc welding torch.

5. The fume extraction system as defined in claim 1, wherein the one or more sensors are arranged on a welding helmet.

6. The fume extraction system as defined in claim 1, wherein the one or more sensors are arranged in proximity to the work space and remote from the arc welding torch, the welding helmet, or the fume extraction system.

7. The fume extraction system as defined in claim 1, wherein the one or more sensors is removably affixed to the fume extraction system orwherein the control circuitry is configured to continuously or periodically monitor the one or more arc characteristics; and adjust a speed of the motor based on changes to the arc characteristics.

8. A fume extraction system, comprising:
one or more sensors configured to monitor one or more arc characteristics of an arc from an arc welding torch;
one or more conduits arranged at a work space;
one or more valves coupling the one or more conduits to a manifold of the fume extraction system; and
control circuitry configured to:
receive information from the one or more sensors corresponding to the one or more arc characteristics; and
adjust a position of the one or more valves to connect the one or more conduits to the manifold based on the one or more arc characteristics.

9. The fume extraction system as defined in claim 8, wherein the one or more sensors are arranged on the one or more conduits proximate to the work space and optionally,
wherein the one or more conduits are coupled to the arc welding torch.

10. The fume extraction system as defined in claim 8, wherein the one or more conduits comprise first and second conduits, the first conduit coupled to the arc welding torch and the second conduit coupled to a second arc welding torch.

11. The fume extraction system as defined in claim 10, wherein the first conduit and the second conduit are both coupled to the one or more valves.

12. The fume extraction system as defined in claim 11, wherein the one or more valves includes first and second valves, the first valve coupled to the first conduit and the second valve coupled to the second conduit.

13. The fume extraction system as defined in claim 12, wherein the one or more sensors comprise first and second sensors, the first sensor configured to monitor arc welding characteristics of the arc welding torch and the second sensor configured to monitor arc welding characteristics of the second arc welding torch.

14. The fume extraction system as defined in claim 13, wherein the control circuitry is further configured to independently control the first and second valves.

15. The fume extraction system as defined in claim 8, wherein the one or more sensors includes one or more of a photodetector, an optical camera, a laser scanner, a temperature sensor, a magnetic sensor, a contact sensor, a current sensor, or a voltage sensor or wherein
the arc characteristics include one or more of a light intensity, a light wavelength, a light frequency, a current to the arc welding torch, or a voltage to the arc welding torch.
